# FASCICULE DE BREVET EUROPEEN

(11) **EP 1 634 284 B1**
(45) Date de publication et mention de la délivrance du brevet: **19.12.2007**
(21) Numéro de dépôt: 04767272.0
(22) Date de dépôt: 07.06.2004
(51) Int. Cl.: G11B 9/00

(54) **DISPOSITIF D'ENREGISTREMENT DE DONNEES COMPORTANT DES MICRO-POINTES ET UN SUPPORT D'ENREGISTREMENT**
DATENAUFZEICHNUNGSEINRICHTUNG MIT MIKROSPITZEN UND AUFZEICHNUNGSMEDIUM
DATA RECORDING DEVICE COMPRISING MICROTIPS AND A RECORDING MEDIUM

(30) Priorité: 13.06.2003 FR 0307158
(43) Date de publication de la demande: 15.03.2006
(73) Titulaire: Commissariat à l'Energie Atomique, 75752 Paris (FR)
(72) Inventeur: GIDON, Serge, F-38140 La Murette (FR); SAMSON, Yves, F-38000 Grenoble (FR); BICHET, Olivier, Royston SG8 5AH (GB); BECHEVET, Bernard, F-38640 Claix (FR)
(74) Mandataire: Jouvray, Marie-Andrée
(86) Numéro de dépôt international: PCT/FR2004/001406
(87) Numéro de publication internationale: WO 2005/004140

(56) Documents cités:
- EP-A- 0 750 298
- US-A1- 2002 172 072
- PATENT ABSTRACTS OF JAPAN vol. 1998, no. 09, 31 juillet 1998 (1998-07-31) -& JP 10 112083 A (MATSUSHITA ELECTRIC IND CO LTD), 28 avril 1998 (1998-04-28)
- PATENT ABSTRACTS OF JAPAN vol. 017, no. 311 (P-1556), 14 juin 1993 (1993-06-14) -& JP 05 028549 A (CANON INC), 5 février 1993 (1993-02-05)
- PATENT ABSTRACTS OF JAPAN vol. 1998, no. 02, 30 janvier 1998 (1998-01-30) -& JP 09 282723 A (MATSUSHITA ELECTRIC IND CO LTD), 31 octobre 1997 (1997-10-31)

## Description

### Domaine technique de l'invention

L'invention concerne un dispositif d'enregistrement de données comportant des micro-pointes et un support d'enregistrement comportant un substrat sur lequel est disposée une couche résistive, ladite couche résistive étant recouverte par une couche active capable de passer d'une première valeur de résistivité électrique à une seconde valeur de résistivité électrique sous l'action d'une tension appliquée entre les micro-pointes et une contre-électrode.

### État de la technique

L'enregistrement de données, aussi bien dans le domaine de l'informatique que dans le domaine des multimédias, doit répondre à un besoin croissant de capacité et donc à une augmentation de la densité de stockage. Récemment, de très grandes capacités de stockage, de l'ordre du Térabit/cm², ont été obtenues en mettant en oeuvre des micro-pointes du type de celles utilisées dans le domaine de la microscopie à effet de pointe telles que les microscopies à force atomique aussi connues sous le nom anglo-saxon AFM ("Atomic Force Microscope"), et les microscopies à balayage à effet tunnel également appelées STM ("Scanning Tunneling Microscope")... Ainsi, l'article « Nanometer-scale recording on chalcogenide films with an atomic force microscope » de H. Kado et al. (Appl. Phys., Letter 66 (2), May 1995, pages 2961-2962) décrit l'utilisation des micro-pointes pour enregistrer des données sur un support d'enregistrement comportant un film actif de GeSb₂Te₄.

Ainsi, la couche active du support d'enregistrement est traversée par un courant électrique circulant depuis les micro-pointes vers une contre-électrode, de manière à créer dans la couche active des zones de résistivités électriques différentes. Par exemple, le passage du courant induit par l'application d'une tension électrique permet de faire passer localement la couche active d'un premier état physique à un second état physique, de préférence par échauffement par Effet Joule.

La couche active est généralement constituée par un matériau à changement de phase tel que les chalcogénures du type GeSbTe et AgInSbTe qui sont déjà utilisés dans le domaine de l'enregistrement optique. Ainsi, la lecture des points mémoires (bits) formés dans la couche active peut être réalisée en détectant, en mode contact, c'est-à-dire lorsque les micro-pointes sont en contact avec le support d'enregistrement, la variation locale de la résistance électrique du support d'enregistrement.

Cependant, la variation de résistance électrique, lors de la phase d'écriture, peut induire des effets sur les micro-pointes et sur le support d'enregistrement. En effet, les micro-pointes et/ou le support d'enregistrement peuvent être endommagés par un courant électrique excessif induit sous les micro-pointes lors de la phase d'écriture. Pour éviter de tels problèmes, il a été notamment proposé dans le document US-A-5751686 correspondant à EP-A-0 750 298, de disposer un film résistant limitant le courant entre la couche active et le substrat, le film pouvant par exemple être un oxyde ou du nitrure de silicium.

L'abrégé de la demande de brevet JP-A-10112083 propose de disposer une couche de protection en diamant ou en carbone quasi diamant sur une couche active formée par un film mince semi-conducteur en GeSb₂Te₄, de manière à la protéger des dommages crées par l'abrasion et l'usure lorsqu'une pointe est en contact avec le support d'enregistrement comportant la couche active.

Ces différentes solutions ne permettent cependant pas d'obtenir un dispositif d'enregistrement satisfaisant du point de vue des propriétés électriques, thermiques et mécaniques.

### Objet de l'invention

L'invention a pour but de réaliser un dispositif d'enregistrement de données remédiant aux inconvénients mentionnés ci-dessus et ayant, plus particulièrement, une grande densité de stockage tout en conservant et même en augmentant le contraste de détection lors de la lecture de données.

Selon l'invention, ce but est atteint par les revendications annexées.

Plus particulièrement, ce but est atteint par le fait qu'au moins un élément résistif en carbone est disposé entre la couche active et les micro-pointes, l'élément résistif ayant une résistivité électrique contrôlée, comprise entre les première et seconde valeurs de résistivité électrique de la couche active.

Selon un développement de l'invention, la couche résistive est en carbone.

Selon un mode de réalisation préférentiel, l'élément résistif comporte des éléments de dopage destinés à ajuster la résistivité électrique de l'élément résistif, les éléments de dopage étant choisis parmi le bore et le phosphore.

Selon une autre caractéristique de l'invention, la couche résistive a une résistivité électrique comprise entre les première et seconde valeurs de résistivité électrique de la couche active

Selon un autre développement de l'invention, la couche résistive comporte des éléments de dopage destinés à ajuster la résistivité électrique de la couche résistive, les éléments de dopage étant choisis parmi le bore, le phosphore, l'argent et le cuivre.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une représentation schématique, en coupe, d'un premier mode de réalisation d'un dispositif d'enregistrement de données selon l'invention.
La figure 2 est une représentation schématique, en coupe, d'un second mode de réalisation d'un dispositif selon l'invention.

### Description de modes particuliers de réalisation.

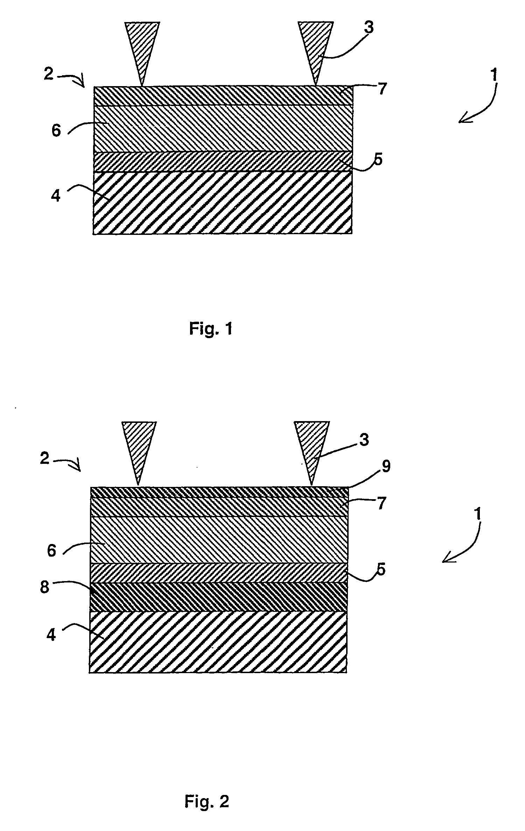

Dans un mode particulier de réalisation représenté à la figure 1, un dispositif d'enregistrement de données 1 comporte un support d'enregistrement 2 et des micro-pointes 3. Le support d'enregistrement 2 comporte un substrat 4 sur lequel est disposée une couche résistive 5. La couche résistive 5 est de préférence en carbone ou, par exemple, en un autre matériau tel que les chalcogénures et elle est recouverte par une couche active 6 dans laquelle peuvent être enregistrés des points mémoires (bit) grâce au passage d'un courant électrique provenant des micro-pointes 3. Ainsi, la couche active 6 est capable de passer d'une première valeur de résistivité électrique à une seconde valeur de résistivité électrique sous l'action d'une tension appliquée entre les micro-pointes et une contre-électrode. La contre-électrode 4 peut, par exemple, être constituée par le substrat 4 lorsque celui-ci est conducteur. Le substrat 4 peut, ainsi, être en silicium dopé, par exemple par de l'antimoine ou du bore, de manière à atteindre une résistivité électrique comprise entre 0,01 et 1 Ohm.cm. Lorsque le substrat 4 est en matériau isolant, la contre-électrode peut être constituée par une couche conductrice disposée sur le substrat 4. Le dispositif d'enregistrement 1 comporte également au moins un élément résistif 7 en carbone disposé entre la couche active et les micro-pointes 3 et ayant, de préférence, une épaisseur de l'ordre de 1 nm. A la figure 1, l'élément résistif 7 en carbone est constitué par une couche disposée sur la couche active 6.

La couche active 6 a, de préférence, une épaisseur inférieure ou égale à 50nm et elle est, de préférence, constituée par un matériau à changement de phase, par exemple, un composé de germanium, d'antimoine et de tellure tel que Ge₂Sb₂Te₅ ou un composé d'argent, d'indium, d'antimoine et de tellure (AgInSbTe). En effet, sous l'action d'un échauffement par effet Joule dû au passage d'un courant électrique induit par l'application d'une tension électrique, de tels matériaux à changement de phase sont capables de passer, d'une première phase présentant une première valeur de résistivité électrique à une seconde phase présentant une seconde valeur de résistivité électrique différente de la première valeur. A titre d'exemple, après écriture, une couche active en composé Ge₂Sb₂Te₅ comporte une pluralité de premières zones constituées par du Ge₂Sb₂Te₅ amorphe et une pluralité de secondes zones formant les points mémoires (bits) et constituées par du Ge₂Sb₂Te₅ cristallin. La résistivité électrique de Ge₂Sb₂Te₅ cristallin est de l'ordre de 0,1 Ohm.cm tandis que la résistivité électrique de Ge₂Sb₂Te₅ amorphe est de l'ordre de 100 Ohm.cm.

La couche résistive 5 en carbone a, de préférence, une épaisseur comprise entre 5nm et 50nm et elle présente une résistivité électrique permettant le passage du courant, depuis les micro-pointes 3 vers le substrat 4, avec une intensité contrôlée. La couche résistive 5 peut, par exemple, être réalisée par un dépôt par pulvérisation cathodique, cette technique permettant de contrôler la résistivité électrique de la couche résistive 5. Ainsi, la résistivité électrique de la couche résistive 5 peut être ajustée à une valeur prédéterminée en ajoutant, dans la couche résistive 5 en carbone, des éléments de dopage choisis parmi le bore, l'argent, le phosphore et le cuivre, dans des proportions comprises entre 0,1% à 10% pour l'argent et le cuivre et 1ppm à 0,1% pour le bore et le phosphore. Le dopage peut notamment être réalisé en rapportant sur la cible de pulvérisation en carbone une pastille de l'ordre de 1cm² de diamètre constituée par un élément de dopage. Un tel dopage permet, ainsi, de contrôler la résistivité électrique de la couche résistive 5, de manière à obtenir une résistivité électrique comprise entre les première et seconde valeurs de résistivité électrique de la couche active 6. La résistivité électrique de la couche résistive 5 est, de préférence, de l'ordre de 1 Ohm.cm.

La couche résistive 5 est également capable de promouvoir la variation locale de résistivité électrique dans la couche active 6, et notamment le passage d'une phase à l'autre dans le cas d'une couche active 6 en matériau à changement de phase. Ainsi, elle a, de préférence, une résistance thermique permettant de garantir une température adaptée à la transition d'une phase à une autre dans la couche active 6. De plus, la couche résistive 5 assure un échauffement en profondeur dans la couche active 6, ce qui permet d'augmenter le volume affecté par le changement de phase dans la couche active 6 et donc de favoriser le contraste de résistance électrique lors de la lecture des points mémoires créés.

La résistance thermique de la couche résistive 5 peut également être renforcée par une couche thermiquement isolante 8 disposée entre le substrat 4 et la couche active 6, comme représenté à la figure 2. La couche thermiquement isolante 8 peut, par exemple, être constituée par un composé de germanium, d'antimoine et de tellure cristallisé par tout type de procédé thermique connu tel qu'un chauffage momentané du support d'enregistrement partiellement réalisé ou à partir d'un composé binaire tel que GeTe. La couche thermiquement isolante peut également servir de contre-électrode à la place du substrat lorsque celui-ci est isolant.

L'élément résistif 7 présente une résistivité électrique contrôlée permettant d'établir un contact électrique entre la couche active 6 et les micro-pointes 3 Ainsi, la résistivité électrique de l'élément résistif 7 est, de préférence, comprise entre les première et seconde valeurs de résistivité électrique de la couche active 6 et l'épaisseur de l'élément résistif 7 est, de préférence, de l'ordre de 1nm. La valeur de la résistivité électrique ainsi que l'épaisseur de l'élément résistif 7 permettent d'obtenir un contraste de résistance électrique adapté entre les zones ayant des résistivités électriques différentes, lors de la lecture du support d'enregistrement.

La résistivité électrique de l'élément résistif 7 peut, ainsi, être ajustée par tout type de moyens connus et, notamment, en dopant l'élément résistif avec des éléments de dopage choisis parmi le bore et le phosphore. A titre d'exemple, dans le cas d'une couche active en GeSbTe, l'élément résistif 7 a une résistivité électrique comprise entre 1 et 10 Ohm.cm et une épaisseur de l'ordre de 1 nm. De manière à contrôler facilement la résistivité électrique de l'élément résistif 7, celui-ci peut être réalisé par un procédé de pulvérisation cathodique en ajustant la pression et la composition du plasma ou par un procédé de dépôt par craquage de gaz de type dépôt chimique en phase vapeur assisté par plasma (PECVD), le gaz pouvant être, par exemple du méthane ou du monoxyde de carbone.

La résistivité électrique de l'élément résistif 7 est donc ajustée de manière à permettre une injection suffisante de courant depuis les micro-pointes vers la couche active 6, avec une intensité contrôlée. L'élément résistif 7 comporte également une résistance thermique permettant d'induire les changements de phase dans la couche active, lors de l'application d'une tension. Il permet, également, de protéger la couche active contre les phénomènes de pollution de surface tels que les effets d'oxydation. Une couche de protection 9 en carbone peut également être disposée sur l'élément résistif 7 (figure 2), de manière à renforcer les propriétés tribologiques de l'élément résistif 7.

Ainsi, les résistivités électriques respectives de la couche résistive 5 et de l'élément résistif 7 sont ajustées en fonction du contraste de résistance apparente de la couche active 6. Ceci permet notamment de palier à un risque de faible contraste entre les résistivités électriques apparentes de deux zones d'état différent de la couche active 6, lors de la lecture du support d'enregistrement. Il est courant qu'il se produise une dérivation latérale d'une partie du courant de lecture dans la couche disposée sur la couche active, ceci provoquant un faible contraste de résistivité électrique.

La couche résistive 5 et l'élément résistif 7 permettent également d'assurer un échauffement suffisant dans l'ensemble de la couche active 6, de manière à induire le changement d'état désiré lors de l'injection du courant, lors d'une étape d'écriture. En effet, la géométrie du volume affecté par le changement d'état influençant directement le contraste lors de la lecture des données, la couche résistive 5 permet d'obtenir un échauffement sur la totalité de l'épaisseur de la couche active. De plus, un tel dispositif permet d'éviter un accroissement excessif du courant injecté dans la couche active 6, lors de son passage à l'état de faible résistivité.

## Revendications

1. Dispositif d'enregistrement de données comportant des micro-pointes (3) et un support d'enregistrement (2) comportant un substrat (4) sur lequel est disposée une couche résistive (5), ladite couche résistive (5) étant recouverte par une couche active (6) capable de passer d'une première valeur de résistivité électrique à une seconde valeur de résistivité électrique sous l'action d'une tension appliquée entre les micro-pointes (3) et une contre-électrode, dispositif **caractérisé en ce qu'**au moins un élément résistif (7) en carbone est disposé entre la couche active (6) et les micro-pointes (3), l'élément résistif (7) ayant une résistivité électrique contrôlée, comprise entre les première et seconde valeurs de résistivité électrique de la couche active (6).

2. Dispositif d'enregistrement selon la revendication 1, **caractérisé en ce que** la couche résistive (5) est en carbone.

3. Dispositif d'enregistrement selon l'une des revendications 1 et 2, **caractérisé en ce que** l'élément résistif (7) comporte des éléments de dopage destinés à ajuster la résistivité électrique de l'élément résistif (7), les éléments de dopage étant choisis parmi le bore et le phosphore.

4. Dispositif d'enregistrement selon l'une quelconque des revendication 1 à 3, **caractérisé en ce que** l'élément résistif (7) a une épaisseur de l'ordre de 1 nm.

5. Dispositif d'enregistrement selon l'une quelconque des revendication 1 à 4, **caractérisé en ce que** l'élément résistif (7) est une couche disposée sur la couche active (6).

6. Dispositif d'enregistrement selon l'une quelconque des revendications 1 à 5, **caractérisé en ce que** la couche résistive (5) a une résistivité électrique comprise entre les première et seconde valeurs de résistivité électrique de la couche active (6).

7. Dispositif d'enregistrement selon l'une quelconque des revendications 1 à 6, **caractérisé en ce que** la couche résistive (5) a une épaisseur comprise entre 5 et 50nm.

8. Dispositif d'enregistrement selon l'une quelconque des revendications 1 à 7, **caractérisé en ce que** la couche résistive (5) comporte des éléments de dopage destinés à ajuster la résistivité électrique de la couche résistive (5), les éléments de dopage étant choisis parmi le bore, le phosphore, l'argent et le cuivre.

9. Dispositif d'enregistrement selon l'une quelconque des revendications 1 à 8, **caractérisé en ce qu'**il comporte une couche de protection (9) en carbone disposée sur l'élément résistif (7).

10. Dispositif d'enregistrement selon l'une quelconque des revendications 1 à 9, **caractérisé en ce qu'**il comporte une couche thermiquement isolante (8) disposée entre le substrat (4) et la couche résistive (5).

11. Dispositif d'enregistrement selon la revendication 10, **caractérisé en ce que** la couche thermiquement isolante (8) est constituée par un composé de germanium, d'antimoine et de tellure cristallisé.

12. Dispositif d'enregistrement selon la revendication 11, **caractérisé en ce que** le composé de germanium, d'antimoine et de tellure cristallisé est obtenu par un chauffage momentané du support d'enregistrement (2) partiellement réalisé.

13. Dispositif d'enregistrement selon la revendication 11, **caractérisé en ce que** le composé de germanium, d'antimoine et de tellure cristallisé est obtenu à partir d'un composé binaire de germanium et de tellure.

14. Dispositif d'enregistrement selon l'une quelconque des revendications 1 à 13, **caractérisé en ce que** la couche active (6) est constituée par un matériau à changement de phase.

15. Dispositif d'enregistrement selon l'une quelconque des revendications 1 à 14, **caractérisé en ce que** la couche active (6) a une épaisseur inférieure ou égale à 50nm.

16. Dispositif d'enregistrement selon l'une quelconque des revendications 1 à 15, **caractérisé en ce que** le substrat (4) étant conducteur, il constitue la contre-électrode.

17. Dispositif d'enregistrement selon la revendication 16, **caractérisé en ce que** le substrat (4) est en silicium dopé.

## Claims

1. Data recording device comprising micro-tips (3) and a recording medium (2) comprising a substrate (4) whereon there is arranged a resistive layer (5), said resistive layer (5) being covered by an active layer (6) able to switch from a first electrical resistivity value to a second electrical resistivity value due to the action of a voltage applied between the micro-tips (3) and a counter-electrode, device **characterized in that** at least one resistive element (7) made of carbon is arranged between the active layer (6) and the micro-tips (3), the resistive element (7) having a controlled electrical resistivity comprised between the first and second electrical resistivity values of the active layer (6).

2. Recording device according to claim 1, **characterized in that** the resistive layer (5) is made of carbon.

3. Recording device according to one of the claims 1 and 2, **characterized in that** the resistive element (7) comprises doping elements designed to adjust the electrical resistivity of the resistive element (7), the doping elements being chosen from boron and phosphorous.

4. Recording device according to any one of the claims 1 to 3, **characterized in that** the resistive element (7) has a thickness of about 1 nm.

5. Recording device according to any one of the claims 1 to 4, **characterized in that** the resistive element (7) is a layer arranged on the active layer (6).

6. Recording device according to any one of the claims 1 to 5, **characterized in that** the resistive layer (5) has an electrical resistivity comprised between the first and second electrical resistivity values of the active layer (6).

7. Recording device according to any one of the claims 1 to 6, **characterized in that** the resistive layer (5) has a thickness comprised between 5 and 50nm.

8. Recording device according to any one of the claims 1 to 7, **characterized in that** the resistive layer (5) comprises doping elements designed to adjust the electrical resistivity of the resistive layer (5), the doping elements being chosen from boron, phosphorous, silver and copper.

9. Recording device according to any one of the claims 1 to 8, **characterized in that** it comprises a protective layer (9) of carbon arranged on the resistive element (7).

10. Recording device according to any one of the claims 1 to 9, **characterized in that** it comprises a thermally insulating layer (8) arranged between the substrate (4) and the resistive layer (5).

11. Recording device according to claim 10, **characterized in that** the thermally insulating layer (8) is formed by a crystallized germanium, antimony and tellurium compound.

12. Recording device according to claim 11, **characterized in that** the crystallized germanium, antimony and tellurium compound is obtained by momentary heating of the partially achieved recording medium (2).

13. Recording device according to claim 11, **characterized in that** the crystallized germanium, antimony and tellurium compound is obtained from a binary germanium and tellurium compound.

14. Recording device according to any one of the claims 1 to 13, **characterized in that** the active layer (6) is formed by a phase change material.

15. Recording device according to any one of the claims 1 to 14, **characterized in that** the active layer (6) has a thickness smaller than or equal to 50nm.

16. Recording device according to any one of the claims 1 to 15, **characterized in that** the substrate (4) being conducting, it constitutes the counter-electrode.

17. Recording device according to claim 16, **characterized in that** the substrate (4) is made of doped silicon.

## Patentansprüche

1. Vorrichtung zum Aufzeichnen von Daten, die Mikrospitzen (3) und ein Aufzeichnungsmedium (2) umfasst, das ein Substrat umfasst (4), auf dem eine resistive Schicht (5) angeordnet ist, welche resistive Schicht (5) von einer aktiven Schicht (6) bedeckt ist, die geeignet ist, von einem ersten Wert elektrischer Resistivität zu einem zweiten Wert elektrischer Resistivität zu wechseln, unter Wirkung einer zwischen den Mikrospitzen (3) und einer Gegenelektrode angelegten Spannung, Vorrichtung, die **dadurch gekennzeichnet ist, dass** mindestens ein resistives Element (7) aus Kohlenstoff zwischen der aktiven Schicht (6) und den Mikrospitzen (3) vorgesehen ist, welches resistive Element (7) eine kontrollierte elektrische Resistivität hat, die zwischen dem ersten und zweiten Wert der elektrischen Resistivität der aktiven Schicht (6) liegt.

2. Aufzeichnungsvorrichtung nach Anspruch 1, **dadurch gekennzeichnet, dass** die resistive Schicht (5) aus Kohlenstoff besteht.

3. Aufzeichnungsvorrichtung nach einem der Ansprüche 1 und 2, **dadurch gekennzeichnet, dass** das resistive Element (7) Dotierungselemente umfasst, die dazu bestimmt sind, die elektrische Resistivität des resistiven Elements (7) anzupassen, wobei die Dotierungselemente aus Bor und Phosphor ausgewählt sind.

4. Aufzeichnungsvorrichtung nach einem der Ansprüche 1 bis 3, **dadurch gekennzeichnet, dass** das resistive Element (7) eine Dicke von etwa 1 nm hat.

5. Aufzeichnungsvorrichtung nach einem der Ansprüche 1 bis 4, **dadurch gekennzeichnet, dass** das resistive Element (7) eine auf der aktiven Schicht (6) angeordnete Schicht ist.

6. Aufzeichnungsvorrichtung nach einem der Ansprüche 1 bis 5, **dadurch gekennzeichnet, dass** die resistive Schicht (5) eine elektrische Resistivität hat, die zwischen dem ersten und zweiten Wert der elektrischen Resistivität der aktiven Schicht (6) liegt.

7. Aufzeichnungsvorrichtung nach einem der Ansprüche 1 bis 6, **dadurch gekennzeichnet, dass** die resistive Schicht (5) eine Dicke von 5 bis 50 nm hat.

8. Aufzeichnungsvorrichtung nach einem der Ansprüche 1 bis 7, **dadurch gekennzeichnet, dass** die resistive Schicht (5) Dotierungselemente umfasst, die dazu bestimmt sind, die elektrische Resistivität der resistiven Schicht (5) anzupassen, wobei die Dotierungselemente aus Bor, Phosphor, Silber und Kupfer ausgewählt sind.

9. Aufzeichnungsvorrichtung nach einem der Ansprüche 1 bis 8, **dadurch gekennzeichnet, dass** sie eine Schutzschicht (9) aus Kohlenstoff umfasst, die auf dem resistiven Element (7) angeordnet ist.

10. Aufzeichnungsvorrichtung nach einem der Ansprüche 1 bis 9, **dadurch gekennzeichnet, dass** sie eine wärmeisolierende Schicht (8) umfasst, die zwischen dem Substrat (4) und der resistiven Schicht (5) angeordnet ist.

11. Aufzeichnungsvorrichtung nach Anspruch 10, **dadurch gekennzeichnet, dass** die wärmeisolierende Schicht (8) von einer Verbindung aus Germanium, Antimon und kristallisiertem Tellur gebildet wird.

12. Aufzeichnungsvorrichtung nach Anspruch 11, **dadurch gekennzeichnet, dass** die Verbindung aus Germanium, Antimon und kristallisiertem Tellur durch eine Kurzzeiterhitzung des teilweise fertiggestellten Aufzeichnungsmediums (2) erhalten wird.

13. Aufzeichnungsvorrichtung nach Anspruch 11, **dadurch gekennzeichnet, dass** die Verbindung aus Germanium, Antimon und kristallisiertem Tellur ausgehend von einer binären Verbindung aus Germanium und Tellur erhalten wird.

14. Aufzeichnungsvorrichtung nach einem der Ansprüche 1 bis 13, **dadurch gekennzeichnet, dass** die aktive Schicht (6) von einem Material mit Phasenübergang gebildet wird.

15. Aufzeichnungsvorrichtung nach einem der Ansprüche 1 bis 14, **dadurch gekennzeichnet, dass** die aktive Schicht (6) eine Dicke von unter oder gleich 50 nm hat.

16. Aufzeichnungsvorrichtung nach einem der Ansprüche 1 bis 15, **dadurch gekennzeichnet, dass** das Substrat (4) leitend ist und die Gegenelektrode bildet.

17. Aufzeichnungsvorrichtung nach Anspruch 16, **dadurch gekennzeichnet, dass** das Substrat (4) aus dotiertem Silizium besteht.
